# EUROPÄISCHE PATENTSCHRIFT

(11) **EP 0 944 659 B1**
(45) Veröffentlichungstag und Bekanntmachung des Hinweises auf die Patenterteilung: **18.10.2000**
(21) Anmeldenummer: 97953799.0
(22) Anmeldetag: 12.12.1997
(51) Int. Cl.: C08F 295/00

(54) **VERFAHREN ZUR HERSTELLUNG VON LINEAREN BLOCKCOPOLYMEREN**
METHOD FOR PRODUCING LINEAR BLOCK COPOLYMERS
PROCEDE DE FABRICATION DE COPOLYMERES SEQUENCES LINEAIRES

(30) Priorität: 16.12.1996 DE 19652312
(43) Veröffentlichungstag der Anmeldung: 29.09.1999
(73) Patentinhaber: BASF AKTIENGESELLSCHAFT, 67056 Ludwigshafen (DE)
(72) Erfinder: MEHLER, Christof, D-67061 Ludwigshafen (DE); GOTTSCHALK, Axel, D-67435 Neustadt (DE); STADLER, Raimund, D-95496 Glashütte (DE); DENIZLIGIL, Selcuk, 81060 Goztepe, Istambul (TR)
(74) Vertreter: Isenbruck, Günter, Dr.
(86) Internationale Anmeldenummer: EP9706987
(87) Internationale Veröffentlichungsnummer: WO9827127

(56) Entgegenhaltungen:
- DE-A- 2 546 377
- DE-A- 2 945 151
- DE-A- 4 240 445
- AUSCHRA C ET AL: "POLYMER ALLOYS BASED ON POLY(2,6-DIMETHYL-1,4-PHENYLENE ETHER) AND POLY(STYRENE-CO-ACRYLONITRILE) USING POLY(STYRENE-B-(ETHYLENE-CO-BUTY LENE)-B-METHYL METHACRYLATE) TRIBLOCK COPOLYMERS AS COMPATIBILIZERS" MACROMOLECULES, Bd. 26, Nr. 24, 22.November 1993, Seiten 6364-6377, XP000413600 in der Anmeldung erwähnt
- GALLI G ET AL: "LIQUID CRYSTALLINE BLOCK COPOLYMERS BY SEQUENTIAL CATIONIC OR PROMOTED CATIONIC AND FREE-RADICAL POLYMERIZATIONS" MACROMOLECULAR SYMPOSIA, Bd. 107, April 1996, Seiten 85-97, XP000625137

## Beschreibung

Die Erfindung betrifft ein Verfahren zur Herstellung von linearen Blockcopolymeren, dabei eingesetzte Makroradikalinitiatoren, die so hergestellten Blockcopolymere und deren Verwendung als Verträglichkeitsvermittler für Polymerblends.

Blockcopolymere aus 2 oder 3 unterschiedlichen Blöcken sind in weitem Umfang bekannt, wie auch ihre Verwendung als Verträglichkeitsvermittler in polymerblends. Dabei zeigen lineare ternäre ABC-Dreiblockcopolymere eine größere Vielfalt an Morphologien als beispielsweise Zweiblockcopolymere oder ABA-Dreiblockcopolymere. Durch Veränderungen der Blocksequenz und der Art der Blöcke besteht dabei die Möglichkeit, die Morphologien und Produkteigenschaften zu modifizieren, wodurch gewünschte Materialeigenschaften in Polymerblends erhalten werden können. Die Herstellung von ABC-Dreiblockcopolymeren erfolgt in der Regel durch anionische Polymerisation.

In der DE-A-4 240 445 sind mehrphasige Polymermischungen beschrieben, die ein lineares Poly(styrol-b-butadien-b-methylmethacrylat)-Blockcopolymer als Verträglichkeitsvermittler enthalten. Das Blockcopolymer wird durch anionische Polymerisation hergestellt.

In C. Auschra, R. Stadler, Macromolecules 1993, 26,6364-6377 sind Poly(styrol-b-(ethylen-co-butylen)-b-methylmethacrylat)-Dreiblockcopolymere beschrieben, die durch sequentielle anionische Polymerisation hergestellt werden.

In R. Stadler et al., Macromolecules, 1995, 28,3080-3097 sind Poly(styrol-b-butadien-b-methylmethacrylat)-Dreiblockcopolymere beschrieben, die durch anionische Polymerisation hergestellt werden.

Nicht alle Monomere lassen sich anionisch polymerisieren. Um eine größere Vielfalt an Dreiblockcopolymeren zu erhalten, die für spezielle Anwendungen angepaßt werden können, sind auch Dreiblockcopolymere solcher Monomere erwünscht, die nicht anionisch polymerisierbar sind.

Aufgabe der vorliegenden Erfindung ist die Bereitstellung eines Verfahrens zur Herstellung von linearen Blockcopolymeren, insbesondere linearen Dreiblockcopolymeren, die auch aus nicht anionisch polymerisierbaren Monomeren hergestellt werden können.

Die Aufgabe wird gelöst durch ein Verfahren zur Herstellung von linearen Blockcopolymeren, die mindestens eine Sequenz A-B-C aus einem Block A aus radikalisch polymerisierbaren Monomeren (a), einem Block B aus Monomeren (b) und einem Block C aus radikalisch polymerisierbaren Monomeren (c) enthalten, wobei die Monomeren (a), (b), (c) voneinander verschieden sind, durch
(1) radikalische Polymerisation von Monomeren (c) mit einem Makroradikalinitiator I der allgemeinen Formel Y-B-X-B-Y, in der X und Y unter Bildung von Radikalen an den Blöcken B spaltbare funktionelle Gruppen sind, wobei X ohne Spaltung von Y gespalten werden kann, unter Bedingungen, die unter selektiver Spaltung von X und Polymerisation von (c) zur Bildung von Makroradikalinitiatoren II rühren, die die Sequenz Y-B-C enthalten,
(2) radikalische Polymerisation von Monomeren (a) mit dem Makroradikalinitiator II unter Spaltung von Y und Bildung von linearen Blockcopolymeren, die die Sequenz A-B-C enthalten.

Multifunktionelle Initiatoren sind an sich bekannt. In C.I. Simionescu et. al., Prog. Polym. Sci., Band 12, 1-109, 1986 sind bi- und polyfunktionelle freie Radikale bildende Polymerisationsinitiatoren beschrieben. Es berden bi- und polyperoxidische Initiatoren, Polyazoinitiatoren und Azoperoxide beschrieben. Weiterhin sind Polymere beschrieben, die mehrere Azogruppen in der Polymerstruktur aufweisen. Mit diesen Initiatoren können beispielsweise ABA-Dreiblockcopolymere hergestellt werden, wie Poly(PMMA-b-PS-b-PMMA).

In Y.N. Baranthsevich, S.S. Ivanchev, Polymer Science U.S.S.R. Band 25, Nr. 10, Seiten 2341-2360, 1983 sind Synthesen von reaktiven Kohlenwasserstoffoligomeren beschrieben, die terminale funktionelle Gruppen aufweisen. Die Oligomere werden dabei durch radikale Oligomerisation hergestellt, die funktionellen Gruppen werden durch entsprechende Strukturen der Initiatoren, wie Azo- oder Peroxidgruppen eingeführt. Es werden beispielsweise Initiatoren aufgeführt, die symmetrisch aufgebaut sind und eine Azogruppe in der Mitte und zwei Carbonsäuregruppen an den Enden des Moleküls enthalten.

In O. Nuyken, R. Weidner, Advances in Polymer Science, 73, 1986, Seiten 145-197 sind polymere Azoinitiatoren zur Herstellung von Pfropf- und Blockcopolymeren beschrieben. Als Initiatoren werden dabei beispielsweise Verbindungen eingesetzt, die zwei Azogruppen enthalten, die unter unterschiedlichen Bedingungen aktiviert werden können. Auf diese Weise können Zweiblockcopolymere, beispielsweise von Methylmethacrylat und Styrol hergestellt werden. Weiterhin werden Initiatoren aufgeführt, die eine Azogruppe und zwei Peroxidgruppen enthalten. Als weitere Initiatoren werden Verbindungen beschrieben, die eine Azogruppe und eine Säurechloridgruppe aufweisen.

Zur Herstellung der erfindungsgemäßen Blockcopolymere, die mindestens Dreiblockcopolymere sind, werden Makroradikalinitiatoren I der allgemeinen Formel Y-B-X-B-Y eingesetzt. Dabei sind B Polymerblöcke aus beliebigen Monomeren (b). Die Monomere (b) können dabei auf beliebige Weise in die Polymerblöcke B überführt werden, beispielsweise durch anionische, kationische oder radikalische Polymerisation. Auch eine Polyaddition oder Polykondensation ist möglich. Beispielsweise können Olefinmonomere, wie Ethylen, Propylen oder höhere Olefine eingesetzt werden, die gegebenenfalls durch Halogenatome, insbesondere Chlor- oder Fluoratome substituiert sind. Weiterhin sind vinylische Monomere verwendbar, insbesondere vinylaromatische Monomere, beispielsweise Styrol und substituierte Styrole. Ebenso sind Vinylester oder Vinylalkohole einsetzbar, beispielsweise Acrylate oder Alkyl, acrylate, insbesondere Methylacrylate. Ferner können Dienmonomere eingesetzt werden, wie 1,3-Butadiene. Darüber hinaus können Alkylenoxide oder Alkyjengjykole wie auch deren cyclische Analoga verwendet werden. Besonders bevorzugt werden Alkylenglykole und deren cyclische Ether wie Tetrahydrofuran eingesetzt. Die cyclischen Ether werden dabei vorzugsweise kationisch polymerisiert.

X und Y sind unter Bildung von Radikalen an den Blöcken B spaltbare funktionelle Gruppen, wobei X ohne Spaltung von Y gespalten werden kann. X und Y sind somit unterschiedliche funktionelle Gruppen, die unter unterschiedlichen Bedingungen spaltbar sind. So ist die Gruppe X selektiv spaltbar ohne Spaltung der Gruppe Y. Die Gruppe Y kann ebenfalls selektiv spaltbar sein. Y kann jedoch auch unter Bedingungen gespalten werden, bei denen gleichzeitig X gespalten wird. X und Y können dabei ansonsten beliebig aufgebaut sein. Eine Spaltung kann durch beliebige Arten der Energiezuführung erfolgen, beispielsweise mechanisch, thermisch oder photochemisch. X und Y können somit funktionelle Gruppen sein, die bei unterschiedlichen Temperaturen thermisch gespalten werden können. Beispiele solcher geeigneter funktioneller Gruppen sind Peroxidgruppen und Azogruppen, die in Form geeigneter Strukturen in den Makroradikalinitiator I eingebaut sind. Geeignete Azoinitiatoren können beispielsweise auf Azoisobutyronitril basieren. Peroxidische Initiatoren können sich beispielsweise von organischen Persäuren ableiten. Geeignete funktionelle Gruppen können den vorstehend aufgeführten Literaturstellen entnommen werden. Vorzugsweise ist eine der Gruppen X und Y thermisch spaltbar, die andere Gruppe photochemisch spaltbar. So kann X thermisch spaltbar sein und Y photochemisch spaltbar sein. Beispielsweise ist X eine thermisch spaltbare auf einer Azogruppe basierende funktionelle Gruppe und Y eine photochemisch spaltbare Gruppe, die auf 4-Phenylpyridin-N-oxid basiert. Für weitere geeignete thermisch spaltbare Gruppen kann auf die vorstehenden Literaturstellen verwiesen werden.

Der Makroradikalinitiator I wird hergestellt durch Polymerisation von Monomeren (b) an eine zweiwertige funktionelle Gruppe X zur Bildung von B-X-B und anschließende Umsetzung mit funktionellen Gruppen Y zur Bildung von Y-B-X-B-Y. Die zweiwertige funktionelle Gruppe X zur Bildung von B-X-B weist somit Funktionalitäten auf, an denen Monomere (b) anpolymerisiert werden können. Dabei ist diese funktionelle Gruppe zweiwertig, so daß 2 Polymerblöcke B an sie gebunden werden. Zur Bildung von B-X-B kann auch die zweiwertige funktionelle Gruppe X mit zwei Polymerblöcken B umgesetzt werden, die zur Anbindung geeignete funktionelle Gruppen aufweisen.

Die direkte Polymerisation von Monomeren an die funktionelle Gruppe ist bevorzugt. Beispielsweise kann die zweiwertige funktionelle Gruppe Säurechloridgruppen aufweisen, über die mit Hilfe von AgSbF₆ cyclische Ether kationisch polymerisiert werden können, wobei vorzugsweise Tetrahydrofuran als cyclischer Ether verwendet wird. Das so erhaltene kationische Polymer wird sodann mit funktionellen Gruppen zur Bildung von Y-B-X-B-Y umgesetzt, beispielsweise mit 4-Phenylpyridin-N-oxid. Ein allgemeines Reaktionsschema 1 is nachstehend aufgeführt, wobei die Stöchiometrie nicht angepaßt ist.

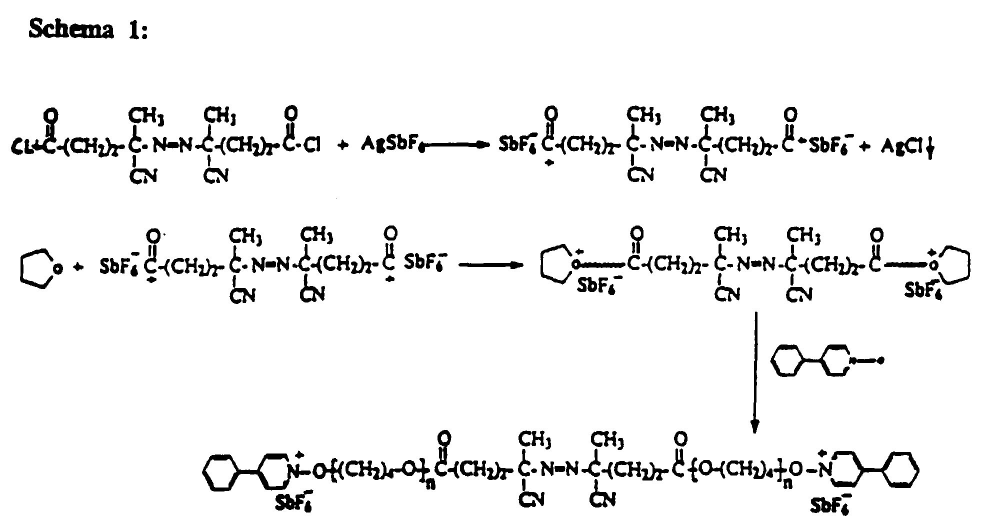

Die Zick-Zack-Linie deutet das wachsende Polymerrückgrat an. Das Molekulargewicht der Makroradikalinitiatoren I beträgt vorzugsweise 1000 bis 500.000, besonders bevorzugt 10.000 bis 200.000. Weitere photochemisch aktivierbare Gruppen, die durch kationische Polymerisation eingeführt werden können, sind durch Umsetzung des PolyTHF-(di)kations mit sogenannten α-Spaltern wie α-Hydroxy-α-methylpropiophenon, Phenylglyoxylsäure oder (1-Hydroxycyclohexyl)-phenylketon erhältliche Gruppen. Die Verbindungen werden über Ether- bzw. Esterverbindungen angebunden und photochemisch unter Abspaltung von Benzoylradikalen in Radikale überführt. Eine weitere Möglichkeit besteht in der Umsetzung mit 2-Diethylaminoethanol und anschließender Aktivierung mit Benzophenon. Dabei wird 2-Diethylaminoethanol über eine Etherbindung angebunden. Bei der photochemischen Aktivierung wird über das Benzophenon ein Wasserstoffatom an einem Ethylrest in α-Stellung abstrahiert.

Ein Poly(THF)-Makroinitiator kann beispielsweise durch kationische Polymerisation von THF (Tetrahydrofuran) durch 4,4'-Azobis-(4-cyanopentanoylhexafluorantimonat) mit abschließender Funktionalisierung der Endgruppen durch Reaktion mit N-Alkoxypyridin erhalten werden. 4,4'-Azobis-(4-cyanopentanoylhexafluorantimonat wird beispielsweise durch Umsetzung von 4,4'-Azobis-(2-cyanopentanoychlorid) (ACPC) mit Silberhexafluoroantimonat erhalten.

Der Makroradikalinitiator I wird zur Umsetzung mit den Monomeren (c) solchen Bedingungen ausgesetzt, daß die funktionelle Gruppe X unter Bildung von Makroradikalinitiator II umgesetzt wird, der die Sequenz Y-B-C enthält. Ist X eine Azogruppen enthaltende funktionelle Gruppe, so wird Stickstoff eliminiert und ein Radikal Y-B erhalten, wobei der ein Rest der funktionellen Gruppe X ohne die Azogruppe im Block B verbleibt. In der Sequenz Y-B-C können somit zwischen den Blöcken B-C Reste der funktionellen Gruppe X enthalten sein. Der Ausdruck "Selektive Spaltung von X" bedeutet die Überführung der funktionellen Gruppe X in 2 Radikale, die direkt oder über an den Blöcken B verbleibende Reste der Gruppe X zur Radikalbildung an den Blöcken B führt. Beispielsweise wird die selektive Spaltung von X thermisch durchgeführt, insbesondere wenn X eine Azogruppierung aufweist. Die radikalische Polymerisation mit den Monomeren (c) kann durch Rekombination oder Disproportionierung abgeschlossen werden. Bei einer Disproportionierung werden Makroradikalinitiatoren II der allgemeinen Formel Y-B-C erhalten. Findet eine Rekombination statt, so können Makroradikalinitiatoren der allgemeinen Formel Y-B-C-B-Y erhalten werden.

Als Monomere (c) können alle radikalisch polymerisierbaren Monomere eingesetzt werden. Das erfindungsgemäße Verfahren erlaubt insbesondere den Einsatz von solchen radikalisch polymerisierbaren Monomeren (c), die nicht anionisch polymerisierbar sind. Beispiele hierfür sind Acrylate, Methacrylate, Vinylester, Vinylchlorid. Als Monomere (c) können zudem die vorstehend aufgeführten radikalisch polymerisierbaren Monomere eingesetzt werden, insbesondere vinylaromatische Monomere, wie Styrol oder substituierte Styrole. Eine Steuerung zwischen Rekombination als Kettenabbruch und Disproportionierung als Kettenabbruch ist durch Zugabe von Kettentransferagenzien, wie Allyldiethylmalonat möglich. Ein Beispiel einer Umsetzung ist im nachstehenden Reaktionsschema 2 angegeben.

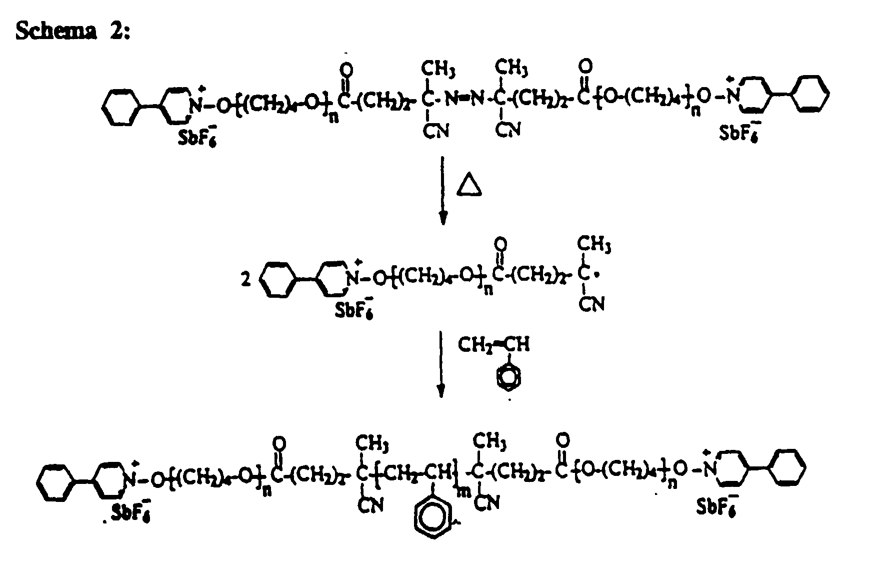

Die Azogruppe wird dabei unter Bildung zweier Poly(THF)Radikale thermisch aktiviert. Die radikalische Polymerisation mit Styrol führt bei Rekombination als Kettenabbruch zu den dargestellten endfunktionalisierten Poly(THF)-block-polystyrol-block-poly(THF)-Dreiblockcopolymeren. Bei Überwiegen von Disproportionierung als Kettenabbruch, insbesondere durch Zugabe von Allydiethylmalonat erreichbar, werden am Poly(THF)-Ende funktionalisierte Poly(THF)-block-polystyrol-Diblockcopolymere erhalten.

Das Molekulargewicht eines Blocks C beträgt borzugsweise 1000 bis 500.000, besonders bevorzugt 10.000 bis 200.000. Das Molekulargewicht des Makroradikalinitiators II beträgt vorzugsweise 2000 bis 1.000.000, besonders bevorzugt 20.000 bis 400.000.

Sodann wird der Makroradikalinitiator II unter Spaltung von Y aktiviert, wobei Radikale mit der Sequenz C-B erhalten werden. Wie bei den funktionellen Gruppen X kann bei der Spaltung von Y ein Teil der funktionellen Gruppe im Molekül verbleiben, das die Radikalfunktion trägt. Die Gruppe Y kann jedoch auch vollständig abgespalten werden, wobei das Radikal direkt am Polymerblock B vorliegt. Die so erhaltenen Makroradikale werden sodann mit Monomeren (a) radikalisch polymerisiert unter Bildung von linearen Blockcopolymeren, die die Sequenz A-B-C enthalten. Bei Verwendung von Makroradikalinitiatoren II der Formel Y-B-C werden Blockcopolymere der allgemeinen Formel A-B-C oder C-B-A-B-C erhalten, je nachdem ob Disproportionierung oder Kettenabbruch auftritt. Beim Einsatz der durch Rekombination erhaltenen Makroradikalinitiatoren der Formel Y-B-C-B-Y werden Blockcopolymere der allgemeinen Formel A-B-C-B-A beziehungsweise A-B-C-B-A-B-C-B-A in Abhängigkeit von Rekombination oder Disproportionierung als Kettenabbruch erhalten. Als Monomere (a) können wiederum beliebige radikalisch polymerisierbare Monomere verwendet werden, wie sie vorstehend aufgeführt sind. Die Monomere (a), (b) und (c) sind dabei voneinander verschieden, so daß in den Blockcopolymeren 3 unterschiedliche Blöcke A, B und C vorliegen. Vorzugsweise sind die Monomere (a) polare Vinylpolymere, insbesondere Alkyl(meth)acrylate, speziell Methylmethacrylat. Die Blöcke A haben vorzugsweise ein Molekulargewicht von 1000 bis 500.000, besonders bevorzugt 10.000 bis 200.000. Das Molekulargewicht der Blockcopolymere beträgt dabei vorzugsweise 3000 bis 1.500.000, besonders bevorzugt 30.000 bis 600.000. Dabei beziehen sich alle Molekulargewichte auf das Gewichtsmittel.

Ein Beispiel der Umsetzung ist im Reaktionsschema 3 nachstehend angegeben.

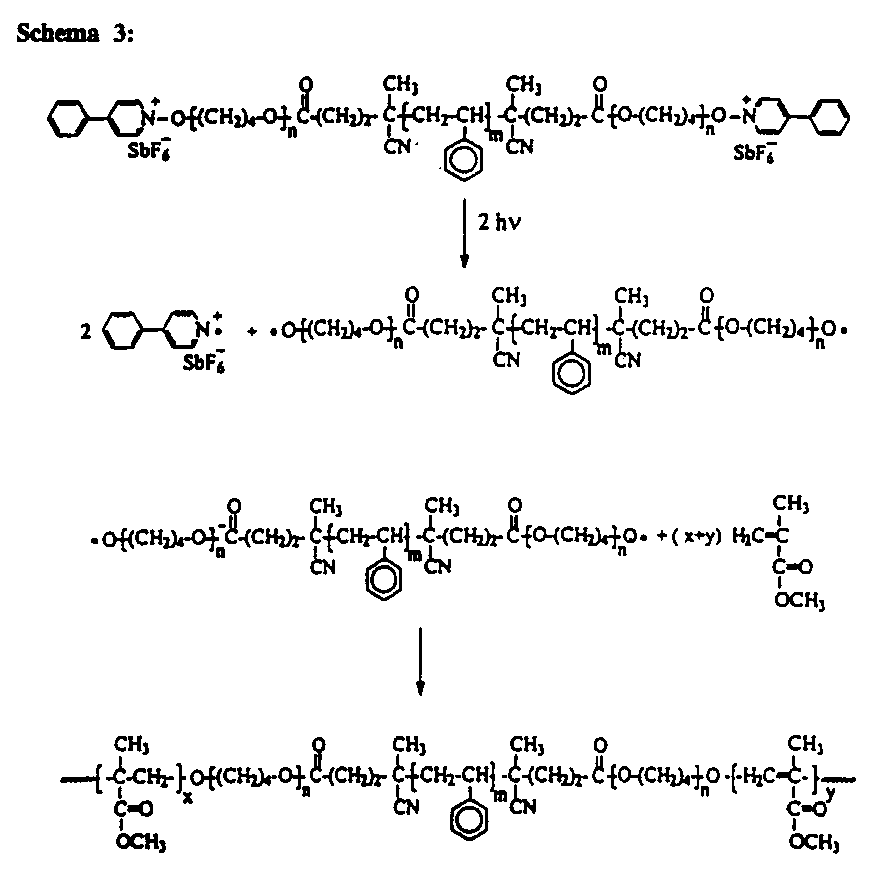

Die gemäß Schema 2 erhaltenen Makroradikalinitiatoren II werden durch photochemische Aktivierung der N-Alkoxypyridingruppen in Gegenwart von Methylmethacrylat aktiviert. Dabei werden durch radikalische Polymerisation Poly(MMA)-block-poly(THF)-block-polystyrol-block-poly(THF)-block-poly(MMA)-Multiblockcopolymere erhalten. Im Falle von disproportionierten Makroradikalinitiatoren aus Schema 2 werden Poly(MMA)-block-poly(THF)-block-polystyrol-Triblockcopolymere beziehungsweise deren symmetrische Dimere erhalten. Die Zick-Zack-Linie in der angegebenen Formel kann eine Gruppe darstellen, die zum Kettenabbruch führt oder eine weitere der angegebenen Strukturen, die durch die Rekombination erhalten wird.

Die erfindungsgemäß herstellbaren Blockcopolymere zeigen eine breitere Molekulargewichtsverteilung als anionisch erhaltene Blockcopolymere und weisen gegenüber anionisch polymerisierten Blockcopolymeren etwas größere Anteile an Homopolymeren beziehungsweise Diblöcken auf.

Die Erfindung betrifft auch bestimmte so hergestellten Blockcopolymere beziehungsweise die zur Herstellung verwendeten Makroinitiatoren I. Insbesondere betrifft die Erfindung auch ein Blockcopolymer mit einer Sequenz A-B-C, A-B-C-B-A, C-B-A-B-C oder A-B-C-B-A-B-C-B-A, wobei A aus C₁₋₄-Alkyl(methyl)acrylat, B aus THF und C aus Styrol aufgebaut ist und an den Enden von B gegebenenfalls Teile von X und Y enthalten sind, die bei der Aktivierung im Molekül verbleiben.

Die erfindungsgemäßen Blockcopolymere sind als Verträglichkeitsvermittler und/oder Schlagzähmodifizierer mit z.B. PolyTHF-Weichphase für Polymerblends verwendbar.

Nachstehend wird die Erfindung anhand eines Beispiels zusätzlich erläutert.

### Beispiel:

### a) Materialien:

THF wurde über Kaliumhydroxid vorgetrocknet und unmittelbar vor Gebrauch von Natrium/Benzophenon abdestilliert. Styrol und MMA wurden mit 5%iger Alkalilösung gewaschen, um den Stabilisator zu entfernen, über Calciumchlorid vorgetrocknet und von Calciumhydrid destilliert. 4-Phenylpyridin-N-oxid (Aldrich) wurde ohne weitere Reinigung eingesetzt. 4,4'-Azobis-(4-cyanopentanoylchlorid) (ACPC) wurde aus der entsprechenden Dicarbonsäure hergestellt.

Alle Polymerisationen wurden unter Stickstoff als Schutzgas durchgeführt.

### b) Synthese von mit N-Alkoxypyridin-terminiertem Poly(THF):

1 mmol 4,4'-Azobis-(4-cyanopentanoylchlorid) (ACPC) wurde in 25 ml THF gelöst und 2 mmol AgSbF₆ wurden in 5 ml frisch destilliertem THF gelöst und auf unter -5°C abgekühlt. Die Polymerisation wurde durch das Mischen der beiden Lösungen gestartet. Das lebende Poly(THF) wurde durch Zugabe einer Lösung von 4-Phenyl-pyridin-N-oxid (20 mmol) in 10 ml Dichlormethan abgebrochen. Die Polymerisationslösung wurde für 3 h bei Raumtemperatur gerührt, in Methanol ausgegossen und auf -20°C abgekühlt. Das ausgefallene Polymer wurde bei Raumtemperatur unter vermindertem Druck getrocknet. Das Polymer wurde in Methanol gelöst, mit Aktivkohle versetzt, über Nacht gerührt, abfiltriert und bei -20°C wieder ausgefällt, abfiltriert und unter vermindertem Druck bei Raumtemperatur getrocknet.

### c) Blockcopolymerisation von Styrol:

0,583g Polymer aus b) wurden in 10 ml Styrol gelöst, entgast und unter Vakuum in eine Quarzampulle eingeschmolzen. Die Polymerisation wurde während 90 min bei 80°C durchgeführt. Das Polymer wurde in einem Überschuß Methanol ausgefällt, abfiltriert und unter vermindertem Druck getrocknet.

### d) Polymerisation von MMA mit 4-Phenyl-pyridin-N-oxid terminiertem Poly(THF)-block-polystyrol:

300 mg Polymer aus c) wurden in 7 ml MMA gelöst, entgast und unter vermindertem Druck in eine Quarzampulle eingeschmolzen. Sodann wurde das Gemisch 60 min mit UV-Licht bestrahlt. Anschließend wurde das erhaltene Polymer in Methanol gefällt, filtriert und unter vermindertem Druck getrocknet. Der verwendete THF-Makroinitiator erlaubt die Einführung von Poly(THF) als Kautschuk-Phase in das Blockcopolymer.

## Patentansprüche

1. Verfahren zur Herstellung von linearen Blockcopolymeren, die mindestens eine Sequenz A-B-C aus einem Block A aus radikalisch polymerisierbaren Monomeren (a), einem Block B aus Monomeren (b) und einem Block C aus radikalisch polymerisierbaren Monomeren (c) enthalten, wobei die Monomeren (a), (b), (c) voneinander verschieden sind, durch
(1) radikalische Polymerisation von Monomeren (c) mit einem Makroradikalinitiator I der allgemeinen Formel Y-B-X-B-Y, in der X und Y unter Bildung von Radikalen an den Blöcken B spaltbare funktionelle Gruppen sind, wobei X ohne Spaltung von Y gespalten werden kann, unter Bedingungen, die unter selektiver Spaltung von X und Polymerisation von (c) zur Bildung von Makroradikalinitiatoren II führen, die die Sequenz Y-B-C enthalten,
(2) radikalische Polymerisation von Monomeren (a) mit dem Makroradikalinitiator II unter Spaltung von Y und Bildung von linearen Blockcopolymeren, die die Sequenz A-B-C enthalten.

2. Verfahren nach Anspruch 1, wobei die Blockcopolymere die Sequenzen A-B-C, A-B-C-B-A, C-B-A-B-C oder A-B-C-B-A-B-C-B-A haben.

3. Verfahren nach Anspruch 1 oder 2, wobei der Makroradikalinitiator I hergestellt wird durch Polymerisation von Monomeren (b) an eine zweiwertige funktionelle Gruppe X zur Bildung von B-X-B und anschließende Umsetzung mit funktionellen Gruppen Y zur Bildung von Y-B-X-B-Y.

4. Verfahren nach einem der Ansprüche 1 bis 3, wobei X thermisch spaltbar ist und vorzugsweise eine Azogruppe enthält.

5. Verfahren nach einem der Ansprüche 1 bis 4, wobei Y photochemisch spaltbar ist und vorzugsweise auf 4-Phenylpyridin-N-oxid basiert.

6. Verfahren nach einem der Ansprüche 1 bis 5, mit einem oder mehreren der folgenden Merkmale:
(b) ist Tetrahydrofuran ist, das kationisch polymerisiert wird,
(a) ist C₁₋₄-Alkyl(meth)acrylat,
(c) ist Styrol.

7. Makroradikalinitiator I der allgemeinen Formel
Y-B-X-B-Y,
wobei Y, B und X die in einem der Ansprüche 1, 4, 5 oder 6 angegebene Bedeutung haben.

8. Lineares Blockcopolymer mit einer Sequenz gemäß Anspruch 2, wobei A aus C₁₋₄-Alkyl(meth)acrylat, B aus Tetrahydrofuran und C aus Styrol aufgebaut ist und an den Enden von B gegebenenfalls Teile von X und Y, wie sie in einem der Ansprüche 1 bis 7 definiert sind, enthalten sind.

9. Verwendung von linearen Blockcopolymeren, wie sie in Anspruch 8 definiert sind, als Verträglichkeitsvermittler für Polymerblends.

## Claims

1. A process for preparing linear block copolymers which comprise at least one A-B-C sequence of a block A made from free-radical-polymerizable monomers (a), a block B made from monomers (b) and a block C made from free-radical-polymerizable monomers (c), where the monomers (a), (b) and (c) are different from one another,
by
(1) free-radical polymerization of monomers (c) with a macroradical initiator I of the formula Y-B-X-B-Y, where X and Y are functional groups which can be cleaved forming radicals on the blocks B, where X can be cleaved without cleaving Y, under conditions which give selective cleavage of X and polymerization of (c) to form macroradical initiators II which comprise the sequence Y-B-C,
(2) free-radical polymerization of monomers (a) with the macroradical initiator II, cleaving Y and forming linear block copolymers which comprise the sequence A-B-C.

2. A process as claimed in claim 1, where the block copolymers have the sequences A-B-C, A-B-C-B-A, C-B-A-B-C or A-B-C-B-A-B-C-B-A.

3. A process as claimed in claim 1 or 2, where the macroradical initiator I is prepared by polymerization of monomers (b) onto a bivalent functional group X forming B-X-B, followed by reaction with functional groups Y forming Y-B-X-B-Y.

4. A process as claimed in any one of claims 1 to 3, where X can be cleaved thermally and preferably contains an azo group.

5. A process as claimed in any one of claims 1 to 4, where Y can be cleaved photochemically and is preferably based on 4-phenylpyridine N-oxide.

6. A process as claimed in any one of claims 1 to 5, with one or more of the following features:
(b) is tetrahydrofuran, which is polymerized cationically,
(a) is C₁₋₄-alkyl (meth)acrylate, and
(c) is styrene.

7. A macroradical initiator I of the formula
Y-B-X-B-Y
where Y, B and X are as defined in any one of claims 1, 4, 5 or 6.

8. A linear block copolymer with a sequence as claimed in claim 2, where A is composed of C₁₋₄-alkyl (meth)acrylate, B of tetrahydrofuran and C of styrene, and parts of X and Y, as defined in any one of claims 1 to 7, are present, if desired, at the ends of B.

9. The use of linear block copolymers as defined in claim 8 as compatibilizers for polymer blends.

## Revendications

1. Procédé pour la préparation de copolymères séquencés linéaires contenant au moins une séquence A-B-C consistant en un bloc A de monomères a) aptes à la polymérisation radicalaire, un bloc B de monomères b) et un bloc de monomères c) aptes à la polymérisation radicalaire, les monomères a), b) et c) étant différents les uns des autres, par
1) polymérisation radicalaire des monomères c) à l'aide d'un inducteur macroradicalaire de formule générale Y-B-X-B-Y dans laquelle X et Y sont des groupes fonctionnels scindables avec formation de radicaux sur les blocs B, X pouvant être scindé sans que Y le soit,
dans des conditions conduisant, avec scission sélective de X et polymérisation de c), à la formation d'inducteurs macroradicalaires II qui contiennent la séquence Y-B-C,
2) polymérisation radicalaire des monomères a) à l'aide de l'inducteur macroradicalaire II avec scission de Y et formation de copolymères séquencés linéaires qui contiennent la séquence A-B-C.

2. Procédé selon la revendication 1, dans lequel les copolymères séquencés présentent les séquences A-B-C, A-B-C-B-A, C-B-A-B-C ou A-B-C-B-A-B-C-B-A.

3. Procédé selon la revendication 1 ou 2, dans lequel l'inducteur macroradicalaire I est préparé par polymérisation des monomères b) sur un groupe fonctionnel divalent X pour formation de B-X-B suivie d'une réaction avec des groupes fonctionnels Y pour formation de Y-B-X-B-Y.

4. Procédé selon une des revendications 1 à 3, dans lequel X est scindable à la chaleur et contient de préférence un groupe azo.

5. Procédé selon une des revendications 1 à 4, dans lequel Y est scindable par voie photochimique et est basé de préférence sur le N-oxyde de la 4-phénylpyridine.

6. Procédé selon une des revendications 1 à 5, présentant une ou plusieurs des caractéristiques suivantes :
(b) est le tétrahydrofuranne qui est soumis à polymérisation cationique,
(a) est un (méth)acrylate d'alkyle en C1-C4,
(c) est le styrène.

7. Inducteur macroradicalaire I de formule générale
Y-B-X-B-Y,
dans laquelle Y, B et X ont les significations indiquées dans l'une des revendications 1, 4, 5 ou 6.

8. Copolymère séquencé linéaire présentant une séquence selon la revendication 2, dans laquelle A est constitué d'un (méth)acrylate d'alkyle en C1-C4, B du tétrahydrofuranne et C du styrène, avec le cas échéant, aux extrémités de B, des parties de X et Y tels que définis dans l'une des revendications 1 à 7.

9. Utilisation des copolymères séquencés linéaires définis dans la revendication 8, en tant que composants apportant la compatibilité dans des mélanges de polymères.
